# EUROPEAN PATENT SPECIFICATION

(11) **EP 3 020 262 B1**
(45) Date of publication and mention of the grant of the patent: **08.08.2018**
(21) Application number: 15193446.0
(22) Date of filing: 06.11.2015
(51) Int. Cl.: A01B 73/00, A01B 73/04, A01B 73/06

(54) **AGRICULTURAL IMPLEMENT FOR SPREADING A PUMPABLE MEDIUM WITH REINFORCED SPREADER ARM**
LANDWIRTSCHAFTLICHES ARBEITSGERÄT MIT VERSTÄRKTEM SPREIZARM ZUM AUSBREITEN EINES PUMPFÄHIGEN MEDIUM
MACHINE AGRICOLE AVEC BRAS D'ÉPANDAGE RENFORCÉ POUR RÉPANDRE UN MOYEN POMPABLE

(30) Priority: 11.11.2014 NL 2013775
(43) Date of publication of application: 18.05.2016
(73) Proprietor: Bomech B.V., 7665 SH Albergen (NL)
(72) Inventor: SCHURINK, Gerard Johannes, 7665 SH Albergen (NL)
(74) Representative: Patentwerk B.V.

(56) References cited:
- DE-A1-102014 006 303
- GB-A- 1 121 603
- GB-A- 1 591 759
- US-A- 3 461 972
- US-A- 4 364 581
- US-A- 6 112 827
- US-A1- 2011 315 411

## Description

The present invention relates to an agricultural implement for spreading a pumpable medium, comprising: a support frame configured to be connected to a vehicle; at least one first spreader arm connected pivotally to the support frame and provided with outlets for pumpable medium, which first spreader arm is movable between an outward folded position extending laterally from the support frame substantially transversely of the direction of travel of the vehicle and a transport position extending in longitudinal direction from the support frame substantially in the direction of travel of the vehicle; and a pumpable medium conduit extending from the support frame, along the spreader arm to the outlets for pumpable medium. The invention also relates to a kit for converting a prior art agricultural implement to an agricultural implement according to the present invention, and to a vehicle provided with such an agricultural implement. Finally, the present invention also relates to a method for preparing for use and a method for preparing for transport an agricultural implement according to the invention placed on a vehicle.

Such agricultural implements are generally known, for instance for spreading liquid manure over (agricultural) land, as spraying device for atomizing liquid crop protection products or as sowing device for sowing land. In order to allow the work to take place as effectively as possible such agricultural implements are provided with one or more operating arms which can be oriented such that in their operative position they extend transversely of the direction of travel of a carrier vehicle so as to be able to work the widest possible strip of (agricultural) land in a single operating run. In order to also enable displacement of the agricultural implement on the (public) highway the operating arm(s) is/are embodied such that they can be folded inward to a position very close to the carrier vehicle. In prior art vehicles the arms usually extend on either side of the carrier vehicle. The vehicle is usually provided with a tank, wherein the arms extend on either side of the tank. The spreader arms must therefore be able to fold compactly inward but have the greatest possible operating width in the outward folded operative mode. It must be taken into account here that the arms may be heavily loaded in the outward folded operative mode, among other ways because of abrupt movement of the carrier vehicle, the presence of pumpable medium in the conduit (whereby the weight to be supported increases) and local height differences in the ground which the spreader arms must desirably to be able to follow. A description of such a device is given for instance in the German Gebrauchsmuster 06008173.9 of the present applicant.

The object of the invention is to provide an agricultural implement of the above stated type, wherein the spreader arms have more stability in an outward folded and/or outward folded and rotated position than the spreader arms in a prior art agricultural implement.

This object is achieved in that the upper side of the support frame is provided with at least one upstand to which is coupled a tension-loadable connecting element which also engages on the spreader arm at a position located a distance from the support frame, such that the spreader arm is partially supported by the tension-loadable connecting element in the outward folded position and that the tension-loadable connecting element is in a non-tensioned state in the transport position of the spreader arm. This tension-loadable connecting element ensures that in the outward folded and/or outward folded and rotated position the spreader arm is partially supported by this connecting element and that the coupling of the spreader arm to the support frame is hereby loaded less than in the prior art. In addition, the coupling of the tension-loadable connecting element at a position a distance from the support frame also imparts additional stability to the spreader arm in that it is now engaged at a plurality of (at least two) locations; a location where the spreader arm is connected to the support frame and a location where the spreader arm is connected to the tension-loadable connecting element. The greater stability of the spreader arm in the outward folded and/or outward folded and rotated position enables the spreader arm to be made longer, whereby the agricultural implement acquires a greater operating width, with all the associated commercial advantages. It is on the other hand also possible to give the spreader arm a lighter form and/or the chance of damage to the spreader arm during use can be reduced. The tension-loadable connecting element can for instance be formed by a (traction) cable, such as a steel cable, although there are also other embodiment options, such as for instance a chain or a pull rod. In the outward folded and/or outward folded and rotated position of the spreader arm the tension-loadable connecting element will generally be under tension, but in the transport position of the spreader arm the tension-loadable connecting element will not be under tension, whereby it is desirable to locally secure the tension-loadable connecting element in this non-tensioned state, for instance by attaching the tension-loadable connecting element to the spreader arm by means of resilient couplings (such as for instance elastic bands).

When the spreader arm is connected to the support frame via a substantially horizontal rotation axis for the purpose of tilting the spreader arm over a horizontal axis from the outward folded position to an outward folded, rotated position, it becomes possible to fold the arm inward even more effectively into the transport position, and it also becomes possible to displace the medium outlets upward into the transport position, whereby they will be less likely to lose/spill medium in uncontrolled manner during transport. During rotation of the spreader arm about the substantially horizontal axis the spreader arm is heavily loaded, during which loading the additional strength imparted to the spreader arm by the present invention is also highly advantageous.

The support frame can be divided into two segments connected via the substantially horizontal rotation axis; a first support frame segment connectable to the vehicle and a second support frame segment pivotable relative to the first support frame segment. A part of the support frame can thus also co-rotate with the at least one spreader arm, and medium outlets mounted on the co-displaceable second support frame segment can also undergo the rotating movements made by the medium outlets mounted on the spreader arm(s). The at least one upstand, to which a tension-loadable connecting element is coupled, is desirably mounted on the second support frame segment so that it co-rotates with the second support frame segment relative to the first support frame segment connectable to the vehicle (or connected to the vehicle during pivoting). The advantage hereof is that the at least one upstand will also co-rotate around the substantially horizontal rotation axis, whereby no or less readjustment of the tension-loadable connecting element will be required in order to tension the tension-loadable connecting element and thus impart the desired additional strength to the pivotable spreader arm(s) than if the at least one upstand were mounted on a non-co-rotating part of the support frame. In this latter case, if the at least one upstand were mounted on a non-co-rotating part of the support frame, tensioning of the tension-loadable connecting element would require more effort. It is also advantageous that the co-rotation of the at least one upstand around the substantially horizontal rotation axis in an intermediate position (also referred to as the "headland" position), wherein the pivotable part of the support frame (the second support frame segment) and the spreader arm(s) connected thereto, both optionally also provided with medium outlets, are in an intermediate position, can also impart strength to the spreader arm(s).

In order to further increase the operating width the support frame can also comprise a second spreader arm which is connected pivotally to the support frame and also provided with outlets for pumpable medium, and which second spreader arm is movable between an outward folded position, which extends laterally from the support frame substantially transversely of the direction of travel of the vehicle and lies substantially in line with the outward folded position of the first spreader arm, and a transport position extending in longitudinal direction from the support frame substantially in the direction of travel of the vehicle, wherein the second spreader arm is also coupled at a position located a distance from the support frame to an upstand of the support frame with a tension-loadable connecting element. It is thus possible to mount two spreader arms rotatably on opposite sides of the support frame such that, when the support frame is coupled to a vehicle in a transport position, the spreader arms lie on either side of the carrier vehicle. Not only does the operating width of course increase with the presence of the second spreader arm, the agricultural implement can also be better balanced; the weight attached to either side of the support frame will generally be more or less equal (since the spreader arms take a similar form). An agricultural implement according to the present invention provided with two spreader arms can also be embodied such that the two spreader arms are jointly rotatable around the horizontal axis.

The support frame can also be provided with a double upstand for co-action with individual spreader arms. The double upstand can be embodied such that, when the agricultural implement is displaced to a transport position, the parts standing upright from the support frame are placed out of the centre, whereby they will not form an obstacle, or less of one, when the support frame is moved to a carrier vehicle (tank). In the case the support frame is provided with a plurality of upright parts, it is possible for the purpose of reinforcing the construction to mutually connect these upright parts (or at least temporarily connect them during use of the agricultural implement in an outward folded situation). Another option is to embody the upstand such that it can be deformed (for instance collapsed or telescopically retracted) such that it does not form an obstacle when the agricultural implement is moved into the transport position.

In yet another variant of the agricultural implement at least one spreader arm is divided into a first segment and a second segment by a hinge and the two segments lie mutually in line in the outward folded, rotated position of the spreader arm, and in the transport position of the spreader arm the two segments lie adjacently of each other. This measure also has the object of increasing the operating width of the agricultural implement. It is precisely when spreader arms assembled from a plurality of segments are applied that there is a need for an increased stability of the spreader arms, and this can be realized with the present invention. When a spreader arm assembled from a plurality of segments is applied the tension-loadable connecting element can for instance be coupled to the segment of the spreader arm connecting to the support frame.

The support of the spreader arm by the tension-loadable connecting element can be adjusted by providing the tension-loadable connecting element with a tensioner. Not only can the force exerted on the spreader arm(s) by the tension-loadable connecting element(s) be built up during or after outward folding of the spreader arm(s), the extent to which the force is exerted can also be set. A tensioner can for instance be embodied as a hydraulic cylinder, although it is also possible to apply a mechanical spring or even to embody the tension-loadable connecting element such that it is itself already resilient to limited extent.

It is also noted in this respect that a spreader arm can usually be connected to the support frame via a drive cylinder (in the form of a hydraulic cylinder) for the purpose of folding the spreader arm in and outward relative to the support frame. If the tensioner of a tension-loadable connecting element now communicates with the drive cylinder, the forces exerted by the two can thus be balanced. An advantage hereof is that the forces exerted on a spreader arm are distributed. A damper can also advantageously be incorporated into such a coupled hydraulic system in order to limit peak loads. Such a damper can be of random form, even a longer conduit of a more or less flexible material can function as damper.

A further option is to couple the tension-loadable connecting element to a spreader arm at two positions and to have the tension-loadable connecting element engage displaceably on the upstand. This is possible for instance by having the tension-loadable connecting element engage on the upstand via a pulley or other guide which limits resistance. A plurality of engaging points means a more uniform support of the spreader arm, which results in a further stabilization of the spreader arm. Having the tension-loadable connecting element engage displaceably on the upstand further realizes that more or less the same forces are exerted at the two engaging points and that one tensioner only can suffice for one spreader arm.

The support frame is desirably provided with coupling and locking means for coupling the agricultural implement to and locking the agricultural implement to a vehicle. In addition to a mechanical coupling of the support frame to a vehicle, it is also desirable that the medium conduit be provided with a coupling for connecting to a feed of pumpable medium forming part of the vehicle. Because diverse drives (such as for instance cylinders for pivoting the spreader arm(s), cylinders for rotating the spreader arm(s) around a horizontal axis, tensioning cylinders for the tension-loadable connecting element, and so on) are usually also provided in the agricultural implement, the agricultural implement is preferably also provided with a plurality of (hydraulic) couplings for operative connection of the plurality of drives to the vehicle. One or more locks can also be provided in order to secure the spreader arm(s) in the inward folded position.

The outlets for pumpable medium can for instance be formed by trailing shoes, opened on the underside, for spreading liquid manure over the land, by spray nozzles for atomizing a pumpable medium over the land, by hoses opened on one side or by nozzles/distributor heads embodied in other manner.

The invention also provides a kit for converting a prior art agricultural implement to an agricultural implement for spreading a pumpable medium as described above, comprising: at least one tension-loadable connecting element; an upstand mountable on the support frame; and a coupling construction for the tension-loadable connecting element fixable to a support arm. In an advantageous variant the conversion kit according to the invention is also provided with a tensioner for the tension-loadable connecting element. Existing agricultural apparatuses can be modified in effective manner with such a conversion kit such that the advantages of the agricultural apparatus according to the present invention can be realized using the modified existing agricultural apparatuses. For an agricultural apparatus with two spreader arms the conversion kit has to comprise: two tension-loadable connecting elements, at least one upstand mountable on the support frame, two coupling constructions for the tension-loadable connecting elements fixable to two support arms, and two tensioners for the tension-loadable connecting elements.

The present invention also provides a vehicle provided with an agricultural implement as described above, wherein the vehicle is provided with a tank for containing a pumpable medium such as for instance a liquid, liquid manure, seed for sowing and/or material for spreading, and with a pump for pumping the pumpable medium, and wherein the support frame of the agricultural implement is placed on the rear side of the tank on the vehicle and the pumpable medium conduit is connected to the tank. With such a vehicle (such as for instance a liquid manure tanker) the pumpable medium can be spread (applied) in advantageous manner.

The invention also provides a method for making ready for use an agricultural implement placed on a vehicle for the purpose of spreading a pumpable medium as described above, comprising the processing steps of: displacing at least one spreader arm from a transport position parallel to the direction of travel of the vehicle to an outward folded, rotated position extending laterally from the support frame substantially transversely of the direction of travel of the vehicle; and supporting the spreader arm, in outward folded, rotated position, from an upstand of the support frame with a tension-loadable connecting element; wherein the tension-loadable connecting element is in a non-tensioned state in the transport position of the spreader arm. It is thus precisely in the situation in which it is most necessary (the outward folded situation) that the spreader arm is additionally supported by the tension-loadable connecting element. Using this method the advantages can be realized as already described above on the basis of the agricultural apparatus according to the present invention, which advantages are also included here by way of reference in respect of the method according to the present invention.

When the spreader arm is assembled from a plurality of segments, these also have to be folded outward by pivoting a first segment of the spreader arm pivotally connected to a second segment of the spreader arm from a position lying adjacently of the second segment of the spreader arm to a position lying in line with the second segment of the spreader arm when the at least one spreader arm is carried from the transport position to the outward folded position. In the case of the spreader arm assembled from segments the spreader arm can also be tilted over a horizontal axis after the spreader arm has been pivoted to the outward folded position.

In the method for making ready for transport an agricultural implement placed on a vehicle for the purpose of spreading a pumpable medium over agricultural land as described above the stated method steps have to be performed in reverse order.

The present invention will be further elucidated on the basis of the non-limitative exemplary embodiments shown in the following figures. Herein:
figures 1A-1C show three perspective views of a prior art agricultural implement coupled to a vehicle in different positions;
figures 2A and 2B show schematically two embodiment variants of an agricultural implement according to the present invention;
figure 3 shows a diagram of a hydraulic system which forms part of an embodiment variant of an agricultural implement according to the present invention;
figure 4 shows a perspective view of an embodiment variant of an agricultural implement according to the present invention; and
figure 5 shows a view of an embodiment variant of a conversion kit according to the present invention.

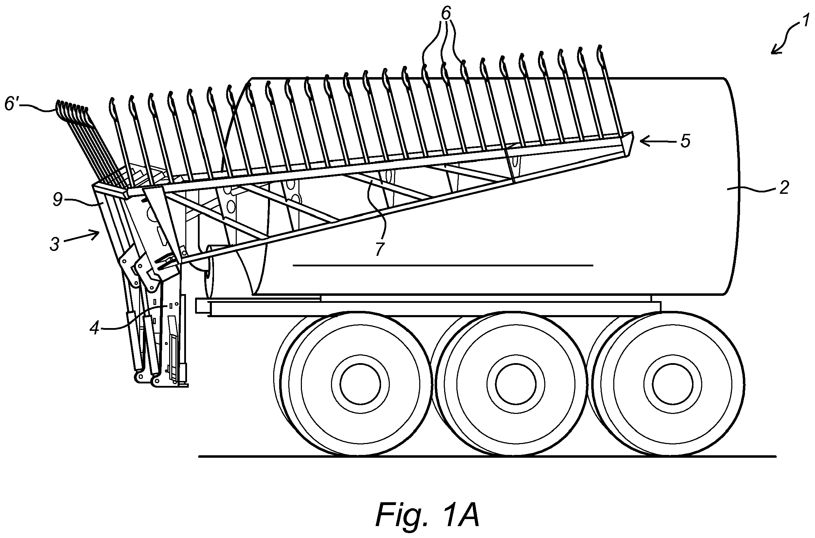

Figure 1A shows a vehicle 1 in the form of a liquid manure tanker, of which a tank 2 forms part. An agricultural implement 3 is mounted on the rear side of vehicle 1. Agricultural implement 3 is provided for this purpose with a support frame 4 which engages with coupling means (not further shown here) on carrier vehicle 1. Support frame 4 can be provided on two sides with a spreader arm 5 which is connected pivotally to support frame 4 and carries medium outlets 6 (here in the form of "trailing shoes"), although only one spreader arm 5 is shown in this figure for the sake of clarity of the drawing. In the situation shown in figure 1A spreader arm 5 lies at the side of tank 2, in the transport position, which means that spreader arm 5 is oriented in the direction of travel of vehicle 1. Also shown in this figure is a cylinder 7 with which spreader arm 5 can be folded outward. Support frame 4 is further provided with a pivotable part 9 which co-rotates with spreader arm 5. Medium outlets 6' mounted on pivotable frame part 9 will thus co-displace with medium outlets 6 of spreader arm 5.

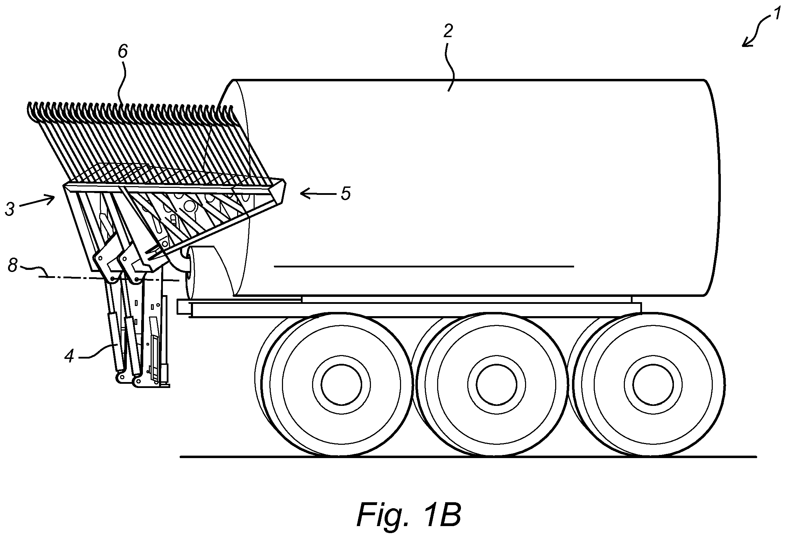

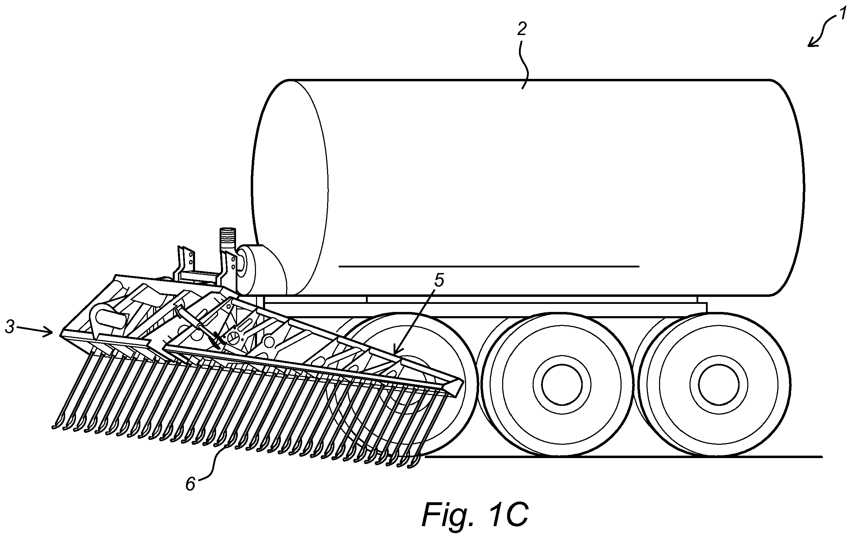

Figure 1B once again shows vehicle 1 with agricultural implement 3 of figure 1A, but now in a situation wherein spreader arm 5 is folded outward to a situation in which spreader arm 5 lies substantially transversely of the direction of travel of vehicle 1. From the situation shown in figure 1B spreader arm 5 - together with a segment of support frame 4 - is tilted around a substantially horizontal rotation axis 8 to an outward folded, rotated position, this situation being shown in figure 1C. In the situation shown in figure 1C agricultural implement 3 is in an operational mode in which a pumpable medium can be spread through medium outlets 6.

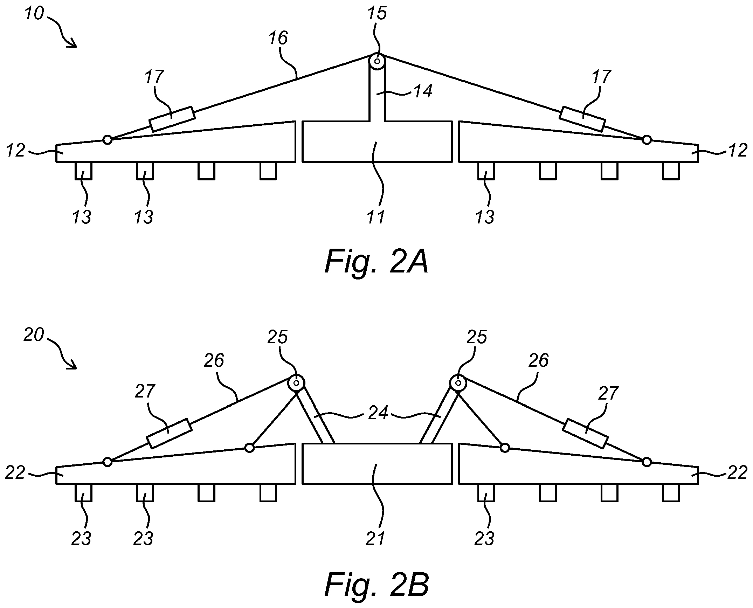

Figure 2A shows schematically an agricultural implement 10 with a support frame 11 on which two spreader arms 12 with medium outlets 13 are mounted. Agricultural implement 10 is shown in an operative outward folded situation. According to the present invention, support frame 11 is provided with an upstand 14 on which a tension-loadable connecting element 16 (for instance in the form of a steel cable) supports via a pulley 15. The tension-loadable connecting element 16 engages on the two spreader arms 12 at a distance from support frame 11. Two tensioners 17 are further incorporated into the tension-loadable connecting element 16 so as to enable adjustment of the tension-loadable connecting element 16. Because of the presence of the tension-loadable connecting element 16 spreader arms 12 are stabilized more than if this tension-loadable connecting element 16 were absent.

Figure 2B shows schematically an agricultural implement 20 with a support frame 21 on which two spreader arms 22 with medium outlets 23 are mounted. Support frame 21 is now provided with two upstands 24, each carrying a pulley 25. The two spreader arms 22 are each also individually supported by two tension-loadable connecting elements 26 which each engage at two different positions on the associated spreader arm 22. Tensioners 27 are once again also incorporated into the two tension-loadable connecting elements 26.

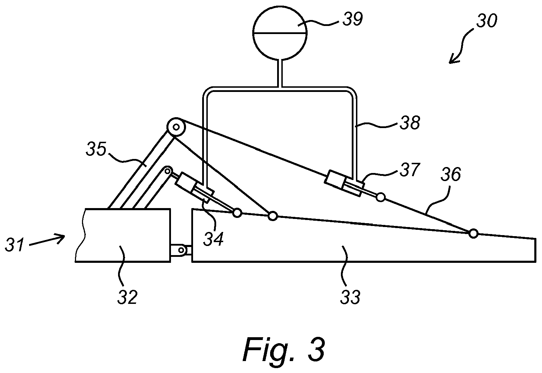

Figure 3 shows a diagram of a hydraulic system 30 which forms part of an embodiment variant of an agricultural implement 31 which is only partially (and schematically) shown. An operating cylinder 34 for folding spreader arm 33 in and outward is present between a support frame 32 and a spreader arm 33. A tensioning cylinder 37 is incorporated into a tension-loadable connecting element 36 which is supported by an upstand 35 of support frame 32. By now hydraulically coupling operating cylinder 34 to tensioning cylinder 37 as shown by means of a hydraulic line 38 the forces exerted on spreader arm 33 by the two cylinders 34, 37 can be balanced. An expansion vessel 39 is also incorporated in hydraulic line 38 to prevent peak loads in the system.

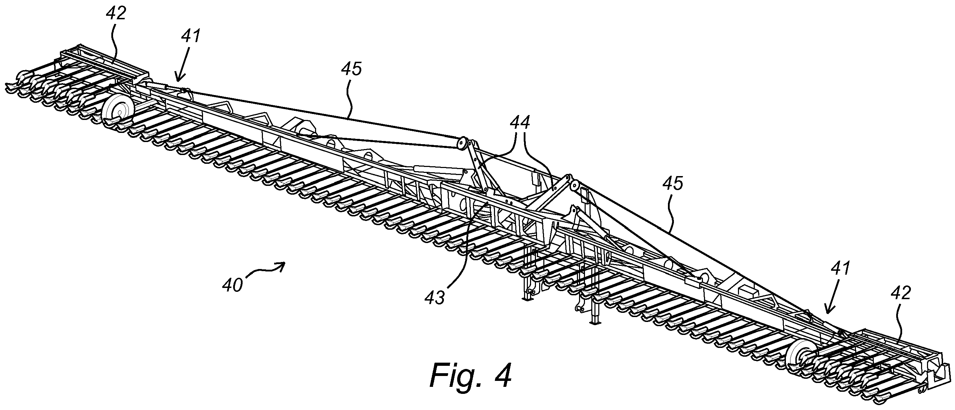

Figure 4 shows an agricultural implement 40 with two spreader arms 41 to which a further top segment 42, which has not yet been folded outward in the situation shown here, is fixed at both outer ends. The two spreader arms 41 are connected pivotally to a support frame 43 on which a double upstand 44 is arranged. Spreader arms 41 are also supported by two tension-loadable connecting elements 45, as already shown schematically in figure 2B. Agricultural implement 40 is otherwise shown in this figure in an outward folded situation, in which spreader arms 41 are pivoted partially downward. This situation is also referred to as the "headland position" and relates to a situation in which spreader arms 41 are very vulnerable. In this situation the additional support of spreader arms 41 by tension-loadable connecting elements 45 is thus particularly desirable.

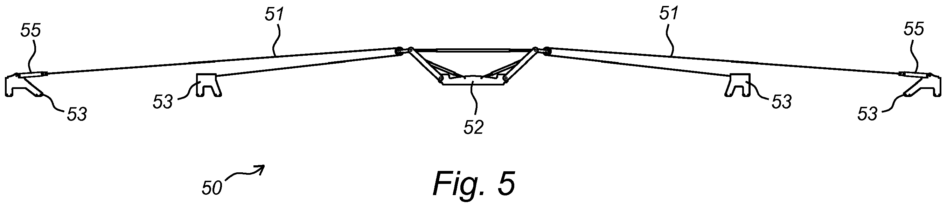

Finally, figure 5 shows a conversion kit 50 with which a prior art agricultural implement (see for instance figures 1A-1C) can be converted in effective manner to an agricultural implement according to the present invention. Conversion kit 50 consists of two tension-loadable connecting elements 51, an upstand 52 mountable on a support frame, four coupling constructions 53 which are mountable on spreader arms and with which the tension-loadable connecting elements 51 can be attached to the spreader arms without local overloading. Tensioners 55 with which the tension-loadable connecting elements 51 can be tensioned are incorporated into two of the coupling constructions 53.

## Claims

1. Agricultural implement for spreading a pumpable medium over agricultural land, comprising:
- a support frame configured to be connected to a vehicle;
- at least one first spreader arm connected pivotally to the support frame and provided with outlets for pumpable medium, which first spreader arm is movable between an outward folded position extending laterally from the support frame substantially transversely of the direction of travel of the vehicle and a transport position extending in longitudinal direction from the support frame substantially in the direction of travel of the vehicle; and
- a pumpable medium conduit extending from the support frame, along the spreader arm to the outlets for pumpable medium;
**characterized in that** the upper side of the support frame is provided with at least one upstand to which is coupled a tension-loadable connecting element which also engages on the spreader arm at a position located a distance from the support frame, such that the spreader arm is partially supported by the tension-loadable connecting element in the outward folded position and that the tension-loadable connecting element is in a non-tensioned state in the transport position of the spreader arm.

2. Agricultural implement as claimed in claim 1, **characterized in that** the spreader arm is connected to the support frame via a substantially horizontal rotation axis for the purpose of tilting the spreader arm over a horizontal axis from the outward folded position to an outward folded, rotated position.

3. Agricultural implement as claimed in claim 2, **characterized in that** the support frame is divided into two segments connected via the substantially horizontal rotation axis; a first support frame segment connectable to the vehicle and a second support frame segment pivotable relative to the first support frame segment.

4. Agricultural implement as claimed in claim 3, **characterized in that** the at least one upstand, to which a tension-loadable connecting element is coupled, is mounted on the second support frame segment such that the at least one upstand co-rotates with the second support frame segment relative to the first support frame segment connectable to the vehicle.

5. Agricultural implement as claimed in any of the foregoing claims, **characterized in that** the support frame also comprises a second spreader arm which is connected pivotally to the support frame and provided with outlets for pumpable medium, and which second spreader arm is movable between an outward folded position, which extends laterally from the support frame substantially transversely of the direction of travel of the vehicle and lies substantially in line with the outward folded position of the first spreader arm, and a transport position extending in longitudinal direction from the support frame substantially in the direction of travel of the vehicle, wherein the second spreader arm is also coupled at a position located a distance from the support frame to an upstand of the support frame with a tension-loadable connecting element.

6. Agricultural implement as claimed in claim 4, **characterized in that** the support frame is provided with a double upstand for co-action with the individual spreader arms.

7. Agricultural implement as claimed in any of the foregoing claims, **characterized in that** at least one spreader arm is divided into a first segment and a second segment by a hinge and that the two segments lie mutually in line in the outward folded, rotated position of the spreader arm, and that in the transport position of the spreader arm the two segments lie adjacently of each other.

8. Agricultural implement as claimed in claim 6, **characterized in that** the tension-loadable connecting element is coupled to the segment of the spreader arm connecting to the support frame.

9. Agricultural implement as claimed in any of the foregoing claims, **characterized in that** a tension-loadable connecting element is coupled at two positions to a spreader arm and that the tension-loadable connecting element engages displaceably on the upstand.

10. Conversion kit for converting a prior art agricultural implement to an agricultural implement for spreading a pumpable medium as claimed in any of the foregoing claims, comprising:
at least one tension-loadable connecting element;
an upstand mountable on the support frame; and
a coupling construction for the tension-loadable connecting element fixable to a support arm.

11. Vehicle provided with an agricultural implement as claimed in any of the claims 1-9, **characterized in that** the vehicle is provided with a tank for containing a pumpable medium such as for instance a liquid, liquid manure, seed for sowing and/or material for spreading, and with a pump for pumping the pumpable medium, and that the support frame of the agricultural implement is placed on the rear side of the tank on the vehicle and the pumpable medium conduit is connected to the tank.

12. Method for making ready for use an agricultural implement as claimed in any of the claims 1-9 placed on a vehicle for the purpose of spreading a pumpable medium, comprising the processing steps of:
displacing at least one spreader arm from a transport position parallel to the direction of travel of the vehicle to an outward folded, rotated position extending laterally from the support frame substantially transversely of the direction of travel of the vehicle; and
supporting the spreader arm, in outward folded, rotated position, from an
upstand of the support frame with a tension-loadable connecting element;
wherein the tension-loadable connecting element is in a non-tensioned state in the transport position of the spreader arm.

13. Method as claimed in claim 12, **characterized in that** when the at least one spreader arm is carried from the transport position to the outward folded position a first segment of the spreader arm pivotally connected to a second segment of the spreader arm is pivoted from a position lying adjacently of the second segment of the spreader arm to a position lying in line with the second segment of the spreader arm.

14. Method as claimed in claim 12 or 13, **characterized in that** after the at least one spreader arm has been pivoted to the outward folded position, the at least one spreader arm is tilted over a horizontal axis.

15. Method for making ready for transport an agricultural implement placed on a vehicle for the purpose of spreading a pumpable medium over agricultural land, **characterized in that** this method comprises the steps as claimed in at least one of the claims 12-14 in reverse order.

## Patentansprüche

1. Landwirtschaftliche Vorrichtung zum Ausbringen eines pumpfähigen Mediums auf einer landwirtschaftlichen Nutzfläche, umfassend:
- einen Tragrahmen ausgelegt zum Verbinden mit einem Fahrzeug;
- mindestens einen ersten Verteilerarm, der drehbar mit dem Tragrahmen verbunden und mit Auslässen für das pumpfähige Medium versehen ist, wobei der erste Verteilerarm zwischen einer nach außen geklappten Position, die sich seitlich vom Tragrahmen aus im Wesentlichen quer zur Fahrtrichtung des Fahrzeugs erstreckt, und einer Transportposition, die sich in Längsrichtung vom Tragrahmen aus im Wesentlichen in Fahrtrichtung des Fahrzeugs erstreckt, bewegt werden kann; und
- eine Pumpmediumleitung, die sich vom Tragrahmen aus entlang des Verteilerarms zu den Auslässen für das pumpfähige Medium erstreckt;
**dadurch gekennzeichnet, dass** die obere Seite des Tragrahmens mit mindestens einem Aufständer versehen ist, an welchem ein zugbelastbares Verbindungselement angekoppelt ist, das an einer vom Tragrahmen entfernt angeordneten Position auch am Verteilerarm angreift, so dass der Verteilerarm in der nach außen geklappten Position teilweise vom zugbelastbaren Verbindungselement gestützt wird, und das zugbelastbare Verbindungselement sich in der Transportposition des Verteilerarm in einem ungespannten Zustand befindet.

2. Landwirtschaftliche Vorrichtung nach Anspruch 1, **dadurch gekennzeichnet, dass** der Verteilerarm mit dem Tragrahmen über eine im Wesentlichen horizontale Rotationsachse mit dem Zweck verbunden ist, den Verteilerarm über eine horizontale Achse aus der nach außen geklappten Position in eine nach außen geklappte, gedrehte Position zu kippen.

3. Landwirtschaftliche Vorrichtung nach Anspruch 2, **dadurch gekennzeichnet, dass** der Tragrahmen in zwei über die im Wesentlichen horizontale Rotationsachse verbundene Segmente unterteilt ist: ein mit dem Fahrzeug verbindbares erstes Tragrahmensegment und ein im Verhältnis zum ersten Tragrahmensegment verschwenkbares zweites Tragrahmensegment.

4. Landwirtschaftliche Vorrichtung nach Anspruch 3, **dadurch gekennzeichnet, dass** der mindestens eine Aufständer, an dem ein zugbelastbares Verbindungselement angekoppelt ist, am zweiten Tragrahmensegment so angebaut ist, dass sich der mindestens eine Aufständer mit dem zweiten Tragrahmensegment im Verhältnis zu dem mit dem Fahrzeug verbindbaren ersten Tragrahmensegment mitdreht.

5. Landwirtschaftliche Vorrichtung nach einem der vorhergehenden Ansprüche, **dadurch gekennzeichnet, dass** der Tragrahmen auch einen zweiten Verteilerarm umfasst, der mit dem Tragrahmen drehbar verbunden und mit Auslässen für pumpfähiges Medium versehen ist, wobei der zweite Verteilerarm zwischen einer nach außen geklappten Position, die sich seitlich vom Tragrahmen aus im Wesentlichen quer zur Fahrtrichtung des Fahrzeugs erstreckt und im Wesentlichen auf einer Linie mit der nach außen geklappten Position des ersten Verteilerarms liegt, und einer Transportposition, die sich in Längsrichtung vom Tragrahmen aus im Wesentlichen in Fahrtrichtung des Fahrzeugs erstreckt, bewegt werden kann, wobei der zweite Verteilerarm auch an einer vom Tragrahmen entfernt angeordneten Position an einem Aufständer des Tragrahmens mit einem zugbelastbaren Verbindungselement angekoppelt ist.

6. Landwirtschaftliche Vorrichtung nach Anspruch 4, **dadurch gekennzeichnet, dass** der Tragrahmen mit einem doppelten Aufständer für ein Zusammenwirken mit den einzelnen Verteilerarmen versehen ist.

7. Landwirtschaftliche Vorrichtung nach einem der vorhergehenden Ansprüche, **dadurch gekennzeichnet, dass** mindestens ein Verteilerarm über ein Scharniergelenk in ein erstes Segment und ein zweites Segment geteilt ist und dass die beiden Segmente in der nach außen geklappten, gedrehten Position des Verteilerarms zueinander auf einer Linie liegen, und dass in der Transportposition des Verteilerarms die beiden Segmente nebeneinander liegen.

8. Landwirtschaftliche Vorrichtung nach Anspruch 6, **dadurch gekennzeichnet, dass** das zugbelastbare Verbindungselement an dem mit dem Tragrahmen verbundenen Segment des Verteilerarms angekoppelt ist.

9. Landwirtschaftliche Vorrichtung nach einem der vorhergehenden Ansprüche, **dadurch gekennzeichnet, dass** ein zugbelastbares Verbindungselement an zwei Positionen an einem Verteilerarm angekoppelt ist und dass das zugbelastbare Verbindungselement verschiebbar in den Aufständer eingreift.

10. Umrüstbausatz zum Umrüsten einer Landwirtschaftlichen Vorrichtung nach dem Stand der Technik zu einer landwirtschaftlichen Vorrichtung zum Ausbringen eines pumpfähigen Mediums nach einem der vorhergehenden Ansprüche, umfassend:
- mindestens ein zugbelastbares Verbindungselement;
- einen am Tragrahmen montierbaren Aufständer; und
- eine an einem Verteilerarm befestigbare Kopplungskonstruktion für das zugbelastbare Verbindungselement.

11. Fahrzeug versehen mit einer landwirtschaftlichen Vorrichtung nach einem der Ansprüche 1 bis 9, **dadurch gekennzeichnet, dass** das Fahrzeug mit einem Behälter zur Aufnahme eines pumpfähigen Mediums wie beispielsweise Flüssigkeit, Gülle, Saatgut und/oder Ausbringmaterial, und mit einer Pumpe zum Pumpen des pumpfähigen Mediums versehen ist und dass der Tragrahmen der landwirtschaftlichen Vorrichtung an der Rückseite des Behälters am Fahrzeug platziert ist und die Pumpmediumleitung mit dem Behälter verbunden ist.

12. Verfahren zum Herstellen der Betriebsbereitschaft einer an einem Fahrzeug platzierten landwirtschaftlichen Vorrichtung zum Ausbringen eines pumpfähigen Mediums nach einem der Ansprüche 1 bis 9, umfassend die Schritte:
- Verschieben mindestens eines Verteilerarms aus einer parallel zur Fahrtrichtung des Fahrzeugs befindlichen Transportposition hin zu einer nach außen geklappten, gedrehten Position, die sich seitlich vom Tragrahmen aus im Wesentlichen quer zur Fahrtrichtung des Fahrzeugs erstreckt; und
- Stützen des Verteilerarms in nach außen geklappter, gedrehter Position ausgehend von einem Aufständer des Tragrahmens mit einem zugbelastbaren Verbindungselement;
wobei das zugbelastbare Verbindungselement sich in der Transportposition des Verteilerarms in einem ungespannten Zustand befindet.

13. Verfahren nach Anspruch 12, **dadurch gekennzeichnet, dass,** wenn mindestens ein Verteilerarm aus der Transportposition in die nach außen geklappte Position gebracht wird, ein mit einem zweiten Element des Verteilerarms drehbar verbundenes erstes Segment des Verteilerarms aus einer Position, in der es angrenzend zum zweiten Segment des Verteilerarms liegt, zu einer Position geschwenkt wird, in der es auf einer Linie mit dem zweiten Segment des Verteilerarms liegt.

14. Verfahren nach Anspruch 12 oder 13, **dadurch gekennzeichnet, dass** nach dem Verschwenken des mindestens einen Verteilerarms in die nach außen geklappte Position der mindestens eine Verteilerarm über eine horizontale Achse gekippt wird.

15. Verfahren zum Herstellen der Transportbereitschaft einer an einem Fahrzeug platzierten landwirtschaftlichen Vorrichtung zum Ausbringen eines pumpfähigen Mediums auf einer landwirtschaftlichen Nutzfläche, **dadurch gekennzeichnet, dass** das Verfahren die Schritte nach mindestens einem der Ansprüche 12 bis 14 in umgekehrter Reihenfolge umfasst.

## Revendications

1. Machine agricole pour épandre un milieu pompable sur une terre agricole, comprenant:
- un cadre de support configuré de manière à être connecté à un véhicule;
- au moins un premier bras d'épandage connecté de façon pivotante au cadre de support et pourvu de sorties pour un milieu pompable, ledit premier bras d'épandage étant déplaçable entre une position pliée vers l'extérieur qui s'étend latéralement à partir du cadre de support sensiblement transversalement à la direction de déplacement du véhicule et une position de transport qui s'étend dans une direction longitudinale à partir du cadre de support sensiblement dans la direction de déplacement du véhicule; et
- un conduit de milieu pompable qui s'étend à partir du cadre de support, le long du bras d'épandage jusqu'aux sorties de milieu pompable;
**caractérisée en ce que** le côté supérieur du cadre de support est pourvu d'au moins un montant auquel est couplé un élément de connexion chargeable en traction qui s'engage également sur le bras d'épandage à une position située à une distance du cadre de support, de telle sorte que le bras d'épandage soit partiellement supporté par l'élément de connexion chargeable en traction dans la position pliée vers l'extérieur et que l'élément de connexion chargeable en traction se trouve dans un état non tendu dans la position de transport du bras d'épandage.

2. Machine agricole selon la revendication 1, **caractérisée en ce que** le bras d'épandage est connecté au cadre de support par l'intermédiaire d'un axe de rotation sensiblement horizontal dans le but d'incliner le bras d'épandage sur un axe horizontal à partir de la position pliée vers l'extérieur jusqu'à une position tournée pliée vers l'extérieur.

3. Machine agricole selon la revendication 2, **caractérisée en ce que** le cadre de support est divisé en deux segments connectés par l'intermédiaire de l'axe de rotation sensiblement horizontal; un premier segment de cadre de support connectable au véhicule et un second segment de cadre de support pivotant par rapport au premier segment de cadre de support.

4. Machine agricole selon la revendication 3, **caractérisée en ce que** ledit au moins un montant, auquel un élément de connexion chargeable en traction est couplé, est monté sur le second segment de cadre de support de telle sorte que ledit au moins un montant tourne conjointement avec le second segment de cadre de support par rapport au premier segment de cadre de support connectable au véhicule.

5. Machine agricole selon l'une quelconque des revendications précédentes, **caractérisée en ce que** le cadre de support comprend également un second bras d'épandage qui est connecté de façon pivotante au cadre de support et qui est pourvu de sorties pour le milieu pompable, et **en ce que** le second bras d'épandage est déplaçable entre une position pliée vers l'extérieur, qui s'étend latéralement à partir du cadre de support sensiblement transversalement à la direction de déplacement du véhicule et se trouve sensiblement en ligne avec la position pliée vers l'extérieur du premier bras d'épandage, et une position de transport qui s'étend dans une direction longitudinale à partir du cadre de support sensiblement dans la direction de déplacement du véhicule, dans laquelle le second bras d'épandage est également couplé à une position située à une distance du cadre de support à un montant du cadre de support avec un élément de connexion chargeable en traction.

6. Machine agricole selon la revendication 4, **caractérisée en ce que** le cadre de support est pourvu d'un double montant pour co-agir avec les bras d'épandage individuels.

7. Machine agricole selon l'une quelconque des revendications précédentes, **caractérisée en ce qu'**au moins un bras d'épandage est divisé en un premier segment et un second segment par une charnière, et **en ce que** les deux segments se trouvent mutuellement en ligne dans la position tournée pliée vers l'extérieur du bras d'épandage, et **en ce que** dans la position de transport du bras d'épandage, les deux segments sont adjacents l'un à l'autre.

8. Machine agricole selon la revendication 6, **caractérisée en ce que** l'élément de connexion chargeable en traction est couplé au segment du bras d'épandage qui se connecte au cadre de support.

9. Machine agricole selon l'une quelconque des revendications précédentes, **caractérisée en ce qu**'un élément de connexion chargeable en traction est couplé à deux positions à un bras d'épandage, et en ce que l'élément de connexion chargeable en traction s'engage de façon déplaçable sur le montant.

10. Kit de conversion pour convertir une machine agricole de la technique antérieure en une machine agricole pour épandre un milieu pompable selon l'une quelconque des revendications précédentes, comprenant:
- au moins un élément de connexion chargeable en traction;
- un montant montable sur le cadre de support; et
- une construction de couplage pour l'élément de connexion chargeable en traction fixable à un bras de support.

11. Véhicule pourvu d'une machine agricole selon l'une quelconque des revendications 1 à 9, **caractérisé en ce que** le véhicule est pourvu d'un réservoir pour contenir un milieu pompable tel que par exemple un liquide, du lisier liquide, des semences pour ensemencer et/ou une matière à pour épandre, et d'une pompe pour pomper le milieu pompable, et **en ce que** le cadre de support de la machine agricole est placé sur le côté arrière du réservoir sur le véhicule et le conduit de milieu pompable est connecté au réservoir.

12. Procédé pour rendre prête à l'emploi une machine agricole selon l'une quelconque des revendications 1 à 9 placée sur un véhicule dans le but d'épandre un milieu pompable, comprenant les étapes de traitement suivantes:
- déplacer au moins un bras d'épandage à partir d'une position de transport parallèle à la direction de déplacement du véhicule jusqu'à une position tournée pliée vers l'extérieur qui s'étend latéralement à partir du cadre de support sensiblement transversalement à la direction de déplacement du véhicule; et
- supporter le bras d'épandage, dans une position tournée pliée vers l'extérieur, à partir d'un montant du cadre de support avec un élément de connexion chargeable en traction;
dans lequel l'élément de connexion chargeable en traction se trouve dans un état non tendu dans la position de transport du bras d'épandage.

13. Procédé selon la revendication 12, **caractérisé en ce que,** lorsque ledit au moins un bras d'épandage est porté à partir de la position de transport jusqu'à la position pliée vers l'extérieur, on fait pivoter un premier segment du bras d'épandage connecté de façon pivotante à un second segment du bras d'épandage à partir d'une position adjacente au second segment du bras d'épandage jusqu'à une position en ligne avec le second segment du bras d'épandage.

14. Procédé selon la revendication 12 ou 13, **caractérisé en ce que,** après que ledit au moins un bras d'épandage ait pivoté dans la position pliée vers l'extérieur, ledit au moins un bras d'épandage est incliné sur un axe horizontal.

15. Procédé pour rendre prête pour le transport une machine agricole placée sur un véhicule dans le but d'épandre un milieu pompable sur une terre agricole, **caractérisé en ce que** ce procédé comprend les étapes selon au moins une des revendications 12 à 14 dans l'ordre inverse.
